# EUROPÄISCHE PATENTSCHRIFT

(11) **EP 0 416 212 B1**
(45) Veröffentlichungstag und Bekanntmachung des Hinweises auf die Patenterteilung: **24.02.1993**
(21) Anmeldenummer: 90109555.4
(22) Anmeldetag: 19.05.1990
(51) Int. Cl.: F16F 1/38

(54) **Gummilager**
Rubber bearing
Palier de caoutchouc

(30) Priorität: 04.09.1989 DE 3929338
(43) Veröffentlichungstag der Anmeldung: 13.03.1991
(73) Patentinhaber: Boge GmbH, D-53783 Eitorf (DE)
(72) Erfinder: Reuter, Horst, D-5307 Wachtberg-Oberbachem (DE); Mayerböck, Wilhelm, D-5483 Kirchdaun (DE)

(56) Entgegenhaltungen:
- EP-A- 0 226 702
- DE-A- 3 131 036
- DE-A- 3 346 666
- DE-A- 3 525 213
- DE-A- 3 800 314
- US-A- 3 604 771

## Beschreibung

Die Erfindung bezieht sich auf ein Gummilager gemäß Oberbegriff des Anspruches 1 oder des Anspruches 9.

Es sind bereits Gummilager zur elastischen Lagerung von Achslenkern und sonstigen Aggregaten in Kraftfahrzeugen bekannt (z.B. EP-A-0 226 702, US-A-3 604 771), welche aus ineinander angeordneten Metallhülsen und zwischen diesen eingebrachten elastomeren Federkörpern bestehen. Der Federungskörper besitzt dabei gegenüber einer Metallhülse auf seiner Außenfläche ringförmige Ausnehmungen zur Aufnahme von Schmiermittel. Nachteilig ist hierbei, wie sich in der Praxis herausgestellt hat, daß bei axialer Montage des Federungskörpers in die Metallhülse das Schmiermittel teilweise verdrängt wird. Dies liegt daran, daß durch die ringförmigen Wülste ringförmige Schmiertaschen gebildet werden, die bei axialer Montage das Schmiermittel teilweise verdrängen, so daß es sich überwiegend in der letzten ringförmigen Ausnehmung sammelt. Während des Fahrbetriebes stellt sich dann heraus, daß der bei der Montage zuerst aufgezogene Bereich weniger Schmiermittel aufweist.

Darüber hinaus werden bei Verdrehbeanspruchung durch die ringförmigen Erhöhungen vornehmlich die gleichen Kontaktflächen des Gummiteiles und/oder der Metallhülse beansprucht. Auf den Kontaktflächen erneuert sich kein Schmierfilm, so daß ein erhöhter Verschleiß auftritt.

Aufgabe der Erfindung ist es, ein Gummilager so weiterzubilden, daß durch eine Verbesserung des das Schmiermittel aufnehmenden Hohlraumes eine gleichmäßige Schmierung der Buchsen und durch eine Beanspruchung nahezu der gesamten Gleitfläche eine Lebensdauererhöhung erzielt wird.

Diese Aufgabe wird mit den Merkmalen des Anspruchs 1 oder des Anspruchs 9 gelöst.

Bei dieser Ausbildung ist von Vorteil, daß nach der Montage des Gummikörpers in die Buchse, falls das Schmiermittel sich aufgrund der elastischen Verformung während der Montage in einem Teilbereich sammelt, im Anschluß wieder auf der gesamten Fläche verteilen kann. Das Schmiermittel kann in jeder Richtung an den Erhöhungen vorbei sich auf der Oberfläche entsprechend verteilen. Dies führt zu einer einwandfreien Schmierung im Betrieb und damit verbunden einer entsprechenden Lebensdauerhöhung. Besonders günstig ist, daß nahezu die gesamte Oberfläche als Gleitfläche während des Betriebes beansprucht wird und sich dadurch der Verschleiß verringert. Dies wirkt sich besonders günstig aus, wenn die Metalloberfläche mit einer Beschichtung versehen ist.

In einer weiteren wesentlichen Ausgestaltung der Erfindung ist vorgesehen, daß als Erhöhungen in Draufsicht v-förmige erhabene Noppen oder kreuzförmige Noppen vorgesehen sind. Vorteilhaft ist bei der v-förmigen oder kreuzförmigen Gestaltung der Noppen, daß in der jeweiligen Drehrichtung des Gummiteiles gegenüber der Buchse Schmiermittel gestaut wird, welches bei der weiteren Drehung der Buchse auch die Kontaktfläche der partiellen Erhöhungen zwangsweise schmiert.

Zur Erzielung eines besonders günstigen Traganteiles des Gummiteiles gegenüber der Buchse sind in Ausgestaltung der Erfindung umfangsverteilt mehrere Reihen von Erhöhungen vorgesehen.

Mit Vorteil sind dabei die Erhöhungen in mindestens einer Richtung versetzt zueinander angeordnet.

Nach einem weiteren wesentlichen Merkmal ist vorgesehen, daß am Ende des Gummiteiles jeweils ein ringförmiger Wulst zur Abdichtung vorgesehen ist.

Eine besonders günstige Ausführungsform sieht vor, daß ein Ende einer Buchse abgewinkelt ist, wobei die dem abgewinkelten Ende der Buchse zugewandte Stirnseite des Gummiteiles als Dichtung ausgebildet ist.

In weiterer Ausgestaltung der Erfindung sind auf der Stirnseite des Gummiteiles Erhöhungen vorgesehen.

Alternativ wird die Aufgabe erfindungsgemäß dadurch gelöst, daß als Hohlraum mindestens ein schraubenförmig über die Oberfläche verlaufender Kanal vorgesehen ist.

Bevorzugte Ausführungsbeispiele der Erfindung sind in den Zeichnungen schematisch dargestellt.

Es zeigt:
Figur 1 ein Gummilager bestehend aus zwei Buchsen und einem Gummiteil im Schnitt
Figur 2 ein Gummiteil als Einzelheit in Draufsicht
Figur 3 eine Stirnseite eines abgewinkelten Gummiteiles mit Erhöhungen in Ansicht
Figur 4 eine Innenbuchse zusammen mit einem Gummiteil als Einzelheit im Schnitt.
Figur 5 eine Draufsicht schraubenförmiger Anordnung von Erhöhungen.

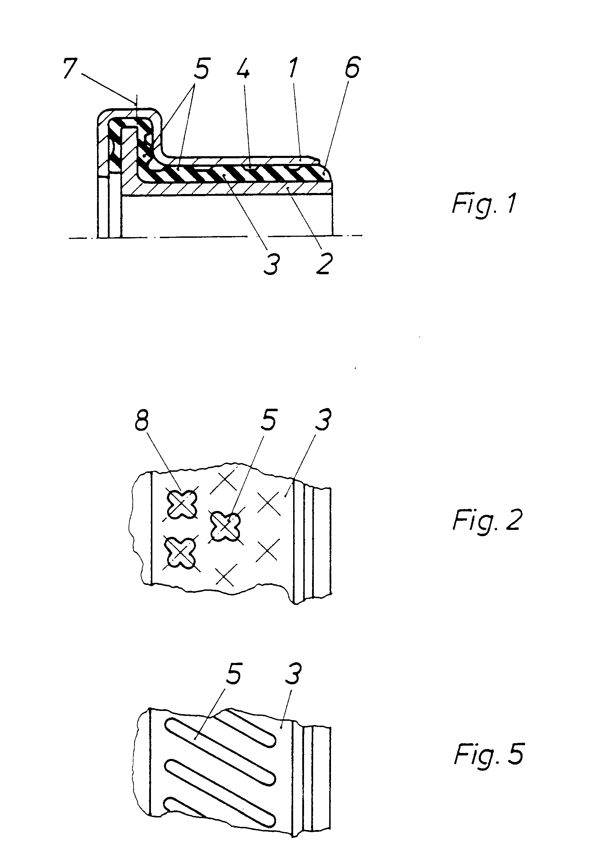

Das in Figur 1 dargestellte Gummilager besteht im wesentlichen aus der innen angeordneten Buchse 2 und im Abstand dazu der außen angeordneten Buchse 1, wobei zwischen beiden Buchsen 1 und 2 ein Gummiteil 3 eingesetzt ist. Auf der Oberfläche des Gummiteiles 3 wird gegenüber der Innenfläche der Buchse 1 ein Hohlraum 4 gebildet, der der Aufnahme von Schmiermittel dient. Die Außenfläche des Gummiteiles 3 weist in den Hohlraum 4 hineinragende Erhöhungen 5 auf, die zur Erzielung einer ausreichenden Tragfähigkeit an der Buchse 1 abgestützt sind. Zwischen den beiden Buchsen 1 und 2 wird zu einem Ende hin der Hohlraum 4 durch einen Wulst 6 abgedichtet.

Bei dem in Figur 1 gezeigten Gummilager handelt es sich um eine Buchse 2, deren Ende abgewinkelt verläuft, wobei das Gummiteil 3 ebenfalls abgewinkelt verlaufend angeordnet ist und auf der Stirnseite 7 ebenfalls mit Erhöhungen 5 versehen ist.

In der Figur 2 ist ein Teil der Oberfläche des Gummiteiles 3 als Einzelheit dargestellt, wobei die Erhöhungen 5 in Form von kreuzförmigen Noppen zu erkennen sind. Diese kreuzförmigen Noppen besitzen den Vorteil, daß bei Drehung des Gummiteiles 3 in Umfangsrichtung Schmiermittel in den Ecken 8 aufgefangen werden kann, welches sich bei weiterer Drehung des Gummiteiles 3 auch auf die Erhöhungen 5 selbst leiten läßt. Durch die zusätzliche versetzte Anordnung mehrerer Reihen von Erhöhungen 5 ist nicht nur eine Schmierung der gesamten Oberfläche gewährleistet, da das Schmiermittel ständig auf der entsprechenden Fläche sich verteilen kann, sondern auch die Schmierung der Erhöhungen 5 selbst wird durch die geometrische Form der Erhöhungen 5 vorteilhaft beeinflußt. Der Wulst 6 ist wie bereits in Figur 1 dargestellt zur Abdichtung der Buchsen gegenüber dem Hohlraum 4 notwendig.

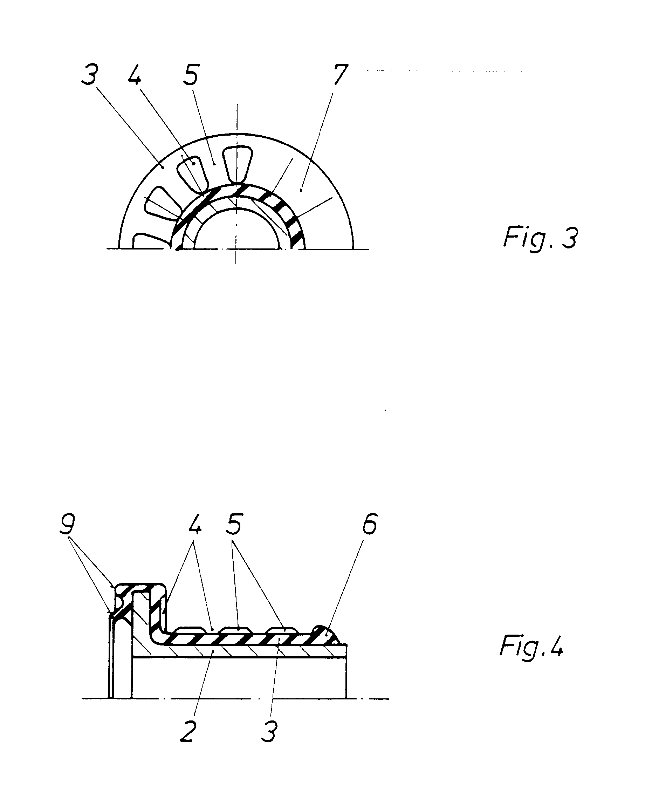

In Figur 3 ist die Stirnseite 7 des Gummiteiles 3 dargestellt, wobei ebenfalls Erhöhungen 5 zur Bildung eines Hohlraumes und Aufnahme von Schmiermitteln Verwendung finden.

In der Figur 4 ist als Einzelheit eine Buchse 2 gezeigt, wobei auf der Oberfläche das Gummiteil 3 mit Erhöhungen 5 versehen ist und zur Abdichtung des einen Endes der Wulst 6 vorgesehen ist. Am abgewinkelten Ende läßt sich das Gummiteil 7 um das Ende herum anbringen, so daß durch weitere Wülste 9 entsprechende Abdichtfunktionen gewährleistet sind.

In der Figur 5 ist eine Ausführungsform gezeigt, bei der die partiellen Erhöhungen 5 im Gummiteil 3 schraubenförmig verlaufend angeordnet sind. Darüber hinaus ist es möglich, daß anstatt der Erhöhungen 5 ein oder mehrere Kanäle auf der Oberfläche des Gummiteiles vorgesehen sind.

### Bezugszeichenliste

1 - Buchse (außen)
2 - Buchse (innen)
3 - Gummiteil
4 - Hohlraum
5 - Erhöhungen
6 - Wulst
7 - Stirnseite
8 - Ecken
9 - Wülste

## Patentansprüche

1. Gummilager bestehend aus einer innen und einer dazu im Abstand außen angeordneten Buchse (1,2) und einem dazwischen eingesetzten Gummiteil (3), wobei zwischen dem Gummiteil (3) und mindestens einer Oberfläche eines der Buchsen Schmiermittel in einem Hohlraum (4) angeordnet ist,
zur Bildung des Hohlraumes (4) das Gummiteil (3) auf seiner Oberfläche mit verteilt angeordneten, Erhöhungen (5) versehen ist und das jeweilige Ende des Gummiteiles (3) gegenüber dem, den Erhöhungen (5) zugewandten Bereich abgedichtet ist, dadurch gekennzeichnet, daß die Erhöhungen (5) über den Umfang und in Längsrichtung der Buchsen (1,2) unzusammenhängend ausgebildet sind.

2. Gummilager nach Anspruch 1,
dadurch gekennzeichnet,
daß als partielle Erhöhungen (5) in Draufsicht v-förmige erhabene Noppen vorgesehen sind.

3. Gummilager nach Anspruch 1,
dadurch gekennzeichnet,
daß als partielle Erhöhungen (5) in Draufsicht kreuzförmige Noppen vorgesehen sind.

4. Gummilager nach Anspruch 1,
dadurch gekennzeichnet,
daß umfangsverteilt mehrere Reihen von partiellen Erhöhungen (5) vorgesehen sind.

5. Gummilager nach Anspruch 4,
dadurch gekennzeichnet,
daß die partiellen Erhöhungen (5) in mindestens einer Richtung versetzt zueinander angeordnet sind.

6. Gummilager nach Anspruch 1,
dadurch gekennzeichnet,
daß am Ende des Gummiteiles (3) jeweils ein ringförmiger Wulst (6) zur Abdichtung vorgesehen ist.

7. Gummilager nach Anspruch 1,
dadurch gekennzeichnet,
daß ein Ende einer Buchse (1,2) abgewinkelt ist, wobei die dem abgewinkelten Ende der Buchse (1,2) zugewandte Stirnseite (7) des Gummiteiles (3) als Dichtung ausgebildet ist.

8. Gummilager nach Anspruch 7,
dadurch gekennzeichnet,
daß auf der Stirnseite (7) des Gummiteiles (3) Erhöhungen (5) vorgesehen sind.

9. Gummilager bestehend aus einer innen und einer dazu im Abstand außen angeordneten Buchse und einem dazwischen eingesetzten Gummiteil, wobei zwischen dem Gummiteil und mindestens einer Oberfläche eines der Buchsen Schmiermittel in einem Hohlraum angeordnet ist,
dadurch gekennzeichnet,
daß als Hohlraum (4) mindestens ein schraubenförmig über die Oberfläche verlaufender Kanal und/oder mindestens eine schraubenförmig verlaufende Erhöhung (5) vorgesehen ist.

## Claims

1. Rubber bearing comprising an inner bush and an outer bush arranged spaced from it (1, 2) and a rubber component (3) inserted between them, lubricant being arranged in a cavity (4) between the rubber component (3) and at least one surface of one of the bushes, the rubber component (3) being provided on its surface with raised portions (5) to form the cavity (4) and the respective end of the rubber component (3) being sealed off in relation to the region which is towards the raised portions (5), characterised in that the raised portions (5) are laid out in an unconnected manner over the periphery and in the longitudinal direction of the bushes (1, 2).

2. Rubber bearing according to claim 1
characterised in that,
knobs or bumps having a V-shape in plan view are provided as special raised portions (5).

3. Rubber bearing according to claim 1,
characterised in that,
knobs or bumps which are cross-shaped in plan view are provided as special raised portions (5).

4. Rubber bearing according to claim 1,
characterised in that,
a number of peripherally distributed rows of special raised portions (5) are provided.

5. Rubber bearing according to claim 4,
characterised in that,
the special raised portions (5) are arranged offset in relation to one another in at least one direction.

6. Rubber bearing according to claim 1,
characterised in that,
a ring-shaped bead (6) is provided for sealing purposes respectively at the end of the rubber component (3).

7. Rubber bearing according to claim 1,
characterised in that,
one end of a bush (1, 2) is folded back, the face (7) of the rubber component (3) which is towards the folded-back end of the bush (1, 2) being formed as a seal.

8. Rubber bearing according to claim 7,
characterised in that,
raised portions (5) are provided on the face (7) of the rubber component (3).

9. Rubber bearing comprising an inner bush and an outer bush spaced from it and a rubber component inserted between them, lubricant being arranged in a cavity between the rubber component and at least one surface of one of the bushes,
characterised in that at least one channel extending helically over the surface and/or at least one helically extending raised portion (5) is provided as the cavity.

## Revendications

1. Palier de caoutchouc composé de douilles (1, 2), l'une intérieure et l'autre disposée extérieurement et à distance de la précédente, et d'une pièce de caoutchouc (3) insérée entre les douilles, un lubrifiant étant contenu dans une cavité (4) entre la pièce en caoutchouc (3) et au moins une surface d'une des douilles, la pièce de caoutchouc (3) étant pourvue sur sa surface, de saillies (5) pour former la cavité (4), et l'extrémité respective de la pièce de caoutchouc (3) étant rendue étanche par rapport à la zone dirigée vers les saillies (5), caractérisé en ce que les saillies (5) sont réalisées de manière à ne pas communiquer entre-elles ni le long de la périphérie, ni en direction longitudinale des douilles (1, 2).

2. Palier de caoutchouc selon la revendication 1, caractérisé en ce qu'en guise de saillies partielles (5) sont prévues des protubérances en forme de "V", en vue de dessus.

3. Palier de caoutchouc selon la revendication 1, caractérisé en ce qu'en guise de saillies partielles (5) sont prévues des protubérances en forme de croix, en vue de dessus.

4. Palier de caoutchouc selon la revendication 1, caractérisé en ce que sont prévues, selon une répartition périphérique, plusieurs rangées de saillies partielles (5).

5. Palier de caoutchouc selon la revendication 4, caractérisé en ce que les saillies partielles (5) sont disposées de manière décalée les unes par rapport aux autres dans au moins une direction.

6. Palier de caoutchouc selon la revendication 1, caractérisé en ce qu'à chaque extrémité de la pièce de caoutchouc (3) est prévu un bourrelet (6) de forme annulaire destiné à l'étanchéité.

7. Palier de caoutchouc selon la revendication 1, caractérisé en ce qu'une extrémité d'une douille (1, 2) est coudée, le côté frontal (7) de la pièce de caoutchouc (3), adjacent à l'extrémité coudée de la douille (1, 2), étant réalisé en tant que joint d'étanchéité.

8. Palier de caoutchouc selon la revendication 7, caractérisé en ce que sur le côté frontal (7) de la pièce de caoutchouc (3), sont prévues des saillies (5).

9. Palier de caoutchouc composé de douilles, l'une intérieure et l'autre disposée extérieurement et à distance de la précédente, et d'une pièce de caoutchouc insérée entre les douilles, un lubrifiant étant contenu dans une cavité entre la pièce de caoutchouc et au moins une surface d'une des douilles, caractérisé en ce qu'en guise de cavité (4) est prévu au moins un canal s'étendant en hélice sur la surface, et/ou au moins une saillie (5) s'étendant en forme d'hélice.
